**Europäisches Patentamt**

**European Patent Office**

**Office européen des brevets**

(19)

(11) **EP 1 185 016 A1**

(12) **EUROPEAN PATENT APPLICATION**
published in accordance with Art. 158(3) EPC

(43) Date of publication:
**06.03.2002 Bulletin 2002/10**

(51) Int Cl.$^7$: **H04J 13/04**, H04B 1/707

(21) Application number: **01919791.2**

(86) International application number:
**PCT/JP01/02953**

(22) Date of filing: **05.04.2001**

(87) International publication number:
**WO 01/78280 (18.10.2001 Gazette 2001/42)**

(84) Designated Contracting States:
**AT BE CH CY DE DK ES FI FR GB GR IE IT LI LU MC NL PT SE TR**

(30) Priority: **06.04.2000 JP 2000105004**

(71) Applicant: **MITSUBISHI DENKI KABUSHIKI KAISHA**
**Tokyo 100-8310 (JP)**

(72) Inventor: **FUJIHARA, Nobuo**
**Mitsubishi Denki Kabushiki Kaisha**
**Chiyoda-ku, Tokyo 100-8310 (JP)**

(74) Representative: **Popp, Eugen, Dr. et al**
**MEISSNER, BOLTE & PARTNER Postfach 86 06 24**
**81633 München (DE)**

(54) **MULTIPLEX COMMUNICATION SYSTEM AND METHOD OF SIGNAL PROCESSING**

(57)     A multiplex communication system includes a scaling circuit for controlling, in response to a scaling control signal, the signal level of a digital multiplex signal digital generated by a modulation circuit; a variable attenuation circuit for attenuating the signal level of the RF signal output from a quadrature modulation circuit in response to an attenuation control signal; and a control signal generating circuit for generating a scaling control signal in response to the effective value of the digital multiplex signal generated by the digital modulation circuit and in accordance with a digital conversion value corresponding to a desired input level of the quadrature modulation circuit, for supplying its output to the scaling circuit, for generating an attenuation control signal in response to the scaling control signal, and for supplying it to the variable attenuation circuit.

FIG.2

## Description

### TECHNICAL FIELD

The present invention relates to a multiplex communication system and its signal processing method.

### BACKGROUND ART

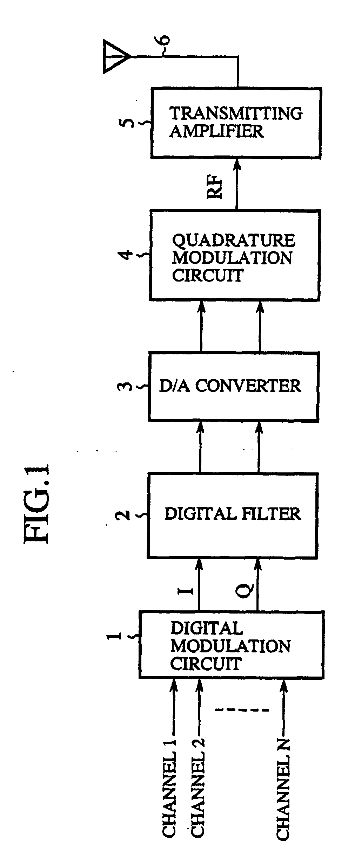

As communication schemes of a multiplex communication system that carries out communications by multiplexing digital signals of multiple channels, there are FDMA (Frequency Division Multiplex Access), TDMA (Time Division Multiplex Access), CDMA (Code Division Multiplex Access) and the like. Fig. 1 is a block diagram showing a configuration of a conventional direct sequence CDMA base station transmitter. In this figure, the reference numeral 1 designates a digital modulation circuit that carries out data modulation and direct sequence CDMA modulation of coded transmission data of multiple channels to generate spread modulation signals each with an in-phase I component and a quadrature Q component, and that carries out multiplex processing of the I components and Q components of the channels independently, thereby generating a digital multiplex signal with an I component and a Q component. The reference numeral 2 designates a digital filter for band-limiting the I and Q components of the digital multiplex signal independently; and 3 designates a D/A converter for converting the I and Q components into analog signals, respectively, thereby generating analog baseband signals of the I and Q components. The reference numeral 4 designates a quadrature modulation circuit for converting the analog baseband signals of the I and Q components into an RF signal; 5 designates a transmitting amplifier for amplifying the RF signal; and 6 designates a transmitting antenna.

Next, the operation will be described.

The digital modulation circuit 1 separates the coded transmission data of each channel to the I and Q components through the data modulation, followed by the direct sequence CDMA modulation. In addition, the I and Q spread signals of individual channels are summed up separately for the I and Q components by a multiplexing circuit installed in the digital modulation circuit 1, and are output as the I and Q components of the digital multiplex signal. In the direct sequence CDMA scheme, the transmission power of each channel is variable independently. Accordingly, the digital multiplex signal consisting of the I and Q components generated by the digital modulation circuit 1 is multivalued data with amplitude fluctuations.

The digital filter 2 band-limits the digital multiplex signal consisting of the I and Q components, which is the multivalued data. The D/A converter 3 converts the I and Q components into the analog signals, respectively, thereby generating the analog baseband signals consisting of the I and Q components. The quadrature modulation circuit 4 up-converts the analog baseband signals consisting of the I and Q components to the RF signal. The transmitting amplifier 5 amplifies the RF signal, and transmits the amplified RF signal via the transmitting antenna 6.

In the conventional direct sequence CDMA base station transmitter, the signal level of the analog baseband signal supplied to the quadrature modulation circuit 4 fluctuates because of the multiplexing state of the base station or becasuse of the fluctuations of each channel power. When the signal level of the analog baseband signal supplied to the quadrature modulation circuit 4 exceeds the dynamic range that will achieve good characteristics of the quadrature modulation circuit 4, a drawback can arise because of the degradation in frequency characteristics due to adjacent channel leakage power.

Accordingly, to maintain good quality of the transmission waveform and frequency characteristics even at the maximum power transmission, the quadrature modulation circuit 4 is adjusted such that the signal level of the input analog baseband signal takes a maximum value within the dynamic range that will enable the good characteristics.

In the conventional direct sequence CDMA base station transmitter with the foregoing configuration, the signal level of the analog baseband signal, that is, the dynamic range of the digital multiplex signal generated by the digital modulation circuit 1 becomes the dynamic range required of the quadrature modulation circuit 4. However, since the digital modulation circuit 1 multiplexes multiple channels, the number and power of which vary greatly, the signal level of the digital multiplex signal fluctuates greatly. As a result, the dynamic range of the analog baseband signal becomes much greater than the dynamic range of the quadrature modulation circuit 4.

On the other hand, when the total power of the variable powers multiplexed by the digital modulation circuit 1 is small, or the number of the multiplexing is small, the signal level of the digital multiplex signal is small. Thus, the analog baseband signal is much smaller than the dynamic range of the quadrature modulation circuit 4. As a result, a carrier leakage component becomes dominant over the RF signal generated by the quadrature modulation circuit 4, thereby causing a problem of the degradation in the waveform quality.

The present invention is implemented to solve the foregoing problem. Therefore, an object of the present invention is to provide a multiplex communication system and its signal processing method that can limit the degradation in the transmission signal waveform quality because of too great or too small an input signal level to the quadrature modulation circuit, and that can correct the signal level in the stages following the quadrature modulation circuit to its normal level. It is achieved by maintaining the input signal level to the quadrature modulation circuit within the dynamic range of the quadrature modulation circuit, even when the signal level of the digital multiplex signal fluctuates because of the multiplexing state of the base station or because of the power fluctuations of individual channels.

DISCLOSURE OF THE INVENTION

According to a first aspect of the present invention, there is provided a multiplex communication system in which signal converting means converts into an analog baseband signal a digital multiplex signal consisting of a plurality of digital signals multiplexed, and in which quadrature modulation means converts the analog baseband signal into an RF signal, the multiplex communication system comprising:

scaling calculation means for calculating a scaling factor, which is used for amplitude adjusting processing of the digital multiplex signal, in response to an amplitude of the digital multiplex signal generated by digital modulation means and in accordance with an amplitude range suitable for signal processing by the quadrature modulation means;

scaling control means for performing the amplitude adjusting processing of the digital multiplex signal in response to the scaling factor calculated by the scaling calculation means, and for supplying its result to the signal converting means; control signal generating means for generating a correction control signal in response to the scaling factor generated by the scaling calculation means; and signal correcting means for performing, in response to the correction control signal, correction processing of the RF signal output from the quadrature modulation means to cancel out effect of the amplitude adjusting processing carried out by the scaling control means.

Thus, it can prevent the degradation in frequency characteristics because of adjacent channel leakage power that can occur when the input signal level to the quadrature modulation means is too large, and the degradation in waveform quality because of the dominant carrier leakage component of the RF signal that can occur when the input signal level is too small. In addition, it can cancel out the effect of the control by the scaling control means on the RF signal output from the quadrature modulation means, thereby offering an advantage of being able to correct the signal level to its original level.

Here, in the multiplex communication system, the control signal generating means may calculate the scaling factor from an effective value of amplitudes of an in-phase component and a quadrature component of the digital multiplex signal and from a digital conversion value of the amplitude range suitable for the signal processing of the quadrature modulation means, the digital multiplex signal being generated by data modulation followed by direct sequence CDMA modulation of coded transmission data of multiple channels by the digital modulation means.

Thus, in the multiplex communication of the direct sequence CDMA scheme, it can prevent the degradation in frequency characteristics because of adjacent channel leakage power that can occur when the input signal level to the quadrature modulation means is too large, and the degradation in waveform quality because of the dominant carrier leakage component of the RF signal that can occur when the input signal level is too small. In addition, it can cancel out the effect of the control by the scaling control means on the RF signal output from the quadrature modulation means, thereby offering an advantage of being able to correct the signal level to its original level.

In the multiplex communication system, the control signal generating means may calculate the scaling factor by $S = INT\{\log_2(D/Z)\}$, and supply the scaling factor to the scaling control means as a scaling control signal, and the scaling control means may shift up by S bits the digital multiplex signal consisting of the in-phase component and quadrature component generated by the digital modulation means when the scaling control signal is positive, and shift it down by S bits when the scaling control signal is negative.

Thus, it offers an advantage of being able to achieve the scaling processing easily by the bit shift processing by the scaling means.

In the multiplex communication system, the control signal generating means may provide the digital conversion value D with a hysteresis characteristic, and carry out S-bit shift up or down of the digital multiplex signal composed of the in-phase component and quadrature component generated by the digital modulation means.

Thus, even when the effective value of the digital multiplex signal repeats the increase and decrease near the changing point of the scaling factor, it can prevent the scaling factor from being changed frequently. As a result, it is not necessary for the scaling control means to carry out the bit shift processing frequently, and for the control signal generating means to generate the attenuation control signal frequently, thereby making it possible to improve the stability of the operation.

In the multiplex communication system, the control signal generating means may supply the signal correcting means with the correction control signal passing through RAMP processing that is performed in response to the correction control signal generated at a predetermined time before and the correction control signal generated at present.

Thus, it can smooth the variations in the correction control signal to be supplied, thereby offering an advantage of being able to prevent the degradation in the frequency characteristics because of the abrupt change in the correction control signal.

According to a second aspect of the present invention, there is provided a signal processing method of a multiplex communication system in which signal converting means converts into an analog baseband signal a digital multiplex signal consisting of a plurality of digital signals multiplexed, and in which quadrature modulation means converts the analog baseband signal into an RF signal, the signal processing method comprising the steps of:

calculating a scaling factor, which is used for amplitude adjusting processing of the digital multiplex signal, in response to an amplitude of the digital multiplex signal generated by digital modulation means and in accordance with an amplitude range suitable for signal processing by the quadrature modulation means; performing the amplitude adjusting processing of the digital multiplex signal in response to the scaling factor calculated, and for supplying its result to the signal converting means; generating a correction control signal in response to the scaling factor generated; and performing, in response to the correction control signal, correction processing of the RF signal output from the quadrature modulation means to cancel out effect of the amplitude adjusting processing.

Thus, it can prevent the degradation in frequency characteristics because of adjacent channel leakage power that can occur when the input signal level to the quadrature modulation means is too large, and the degradation in waveform quality because of the dominant carrier leakage component of the RF signal that can occur when the input signal level is too small. In addition, it can cancel out the effect of the control by the scaling value on the RF signal output from the quadrature modulation circuit, thereby offering an advantage of being able to correct the signal level to its original level.

BRIEF DESCRIPTION OF THE DRAWINGS

Fig. 1 is a block diagram showing a configuration of a conventional direct sequence CDMA base station transmitter;
Fig. 2 is a block diagram showing a configuration of an embodiment 1 of the direct sequence CDMA base station transmitter in accordance with the present invention;
Fig. 3 is a characteristic diagram illustrating characteristics of a variable attenuation circuit;
Fig. 4 is a diagram illustrating the operation of a scaling factor calculation circuit;
Fig. 5 is a diagram illustrating the operation of a scaling factor calculation circuit of an embodiment 2 of the direct sequence CDMA base station transmitter in accordance with the present invention;
Fig. 6 is a block diagram showing a configuration of an embodiment 3 of the direct sequence CDMA base station transmitter in accordance with the present invention; and
Fig. 7 is a diagram illustrating the operation of the embodiment 3 of the direct sequence CDMA base station transmitter in accordance with the present invention.

BEST MODE FOR CARRYING OUT THE INVENTION

The best mode for carrying out the invention will now be described with reference to the accompanying drawings to explain the present invention in more detail.

EMBODIMENT 1

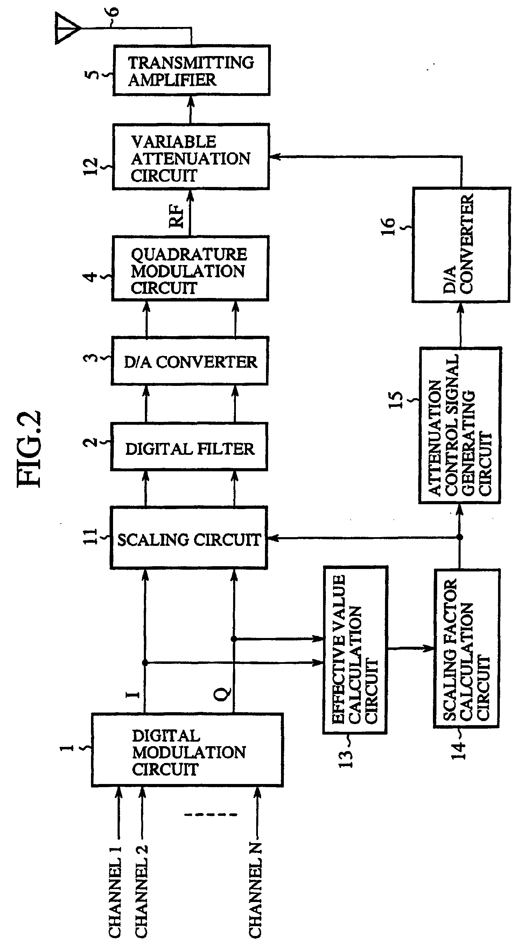

Fig. 2 is a block diagram showing a configuration of an embodiment 1 of the direct sequence CDMA base station transmitter in accordance with the present invention. In this figure, the reference numeral 1 designates a digital modulation circuit (digital modulation means) that carries out data modulation and direct sequence CDMA modulation of coded transmission data of multiple channels to generate a spread modulation signal with an in-phase I component and a quadrature Q component, and that carries out multiplex processing of the I components and Q components of the channels independently, thereby generating a digital multiplex signal with an I component and a Q component.
The reference numeral 11 designates a scaling circuit (scaling control means) for controlling the signal level of the digital multiplex signal consisting of the I and Q components generated by the digital modulation circuit 1, in response to a scaling control signal that will be described later. The reference numeral 2 designates a digital filter for band-limiting the I and Q components of the digital multiplex signal independently; and 3 designates a D/A converter (signal converting means) for converting the I and Q components into corresponding analog signals, thereby generating analog baseband signals of the I and Q components. The reference numeral 4 designates a quadrature modulation circuit (quadrature modulation means) for converting the analog baseband signals of the I and Q components into an RF signal; 12 designates a variable attenuation circuit (signal correcting means) for attenuating the signal level of the RF signal output from the quadrature modulation circuit 4 in response to an attenuation control signal that will be described later. The reference numeral 5 designates a transmitting amplifier for amplifying the RF signal; and 6 designates a transmitting antenna.
The reference numeral 13 designates an effective value calculation circuit (scaling calculation means) for calculating effective values of the digital multiplex signal consisting of the I and Q components generated by the digital modulation circuit 1; and 14 designates a scaling factor calculation circuit (scaling calculation means) for calculating a scaling factor in accordance with the effective value of the digital multiplex signal calculated by the effective value calculation circuit 13 and in accordance with a digital conversion value of a desired level to be supplied to the quadrature modulation circuit 4 from a section consisting of the stages from the scaling circuit 11 to the D/A converter 3, and for supplying its output to the scaling circuit 11 and to an attenuation control signal generating circuit 15 that will be described later as the scaling control signal.

The reference numeral 15 designates the attenuation control signal generating circuit (control signal generating means) for generating the attenuation control signal in response to the scaling control signal supplied from the scaling factor calculation circuit 14 and the characteristics of the variable attenuation circuit 12; and 16 designates a D/A converter for carrying out the D/A conversion of the attenuation control signal, and supplies its output to the variable attenuation circuit 12.

Next, the operation will be described.

The digital modulation circuit 1 separates the coded transmission data of each channel to the I and Q components through the data modulation, followed by the direct sequence CDMA modulation. In addition, the I and Q spread signals of individual channels are summed up separately for the I and Q components by a multiplexing circuit installed in the digital modulation circuit 1, and are output as the I component and the Q component of the digital multiplex signal. In the direct sequence CDMA scheme, the transmission power of each channel is variable independently. Accordingly, the digital multiplex signal consisting of the I component and the Q component generated by the digital modulation circuit 1 is multivalued data including amplitude fluctuations.

The effective value calculation circuit 13 calculates the effective value of the digital multiplex signal consisting of the I and Q components generated by the digital modulation circuit 1 by the following expression (1).

$$Z = \{(1/T)\Sigma(DI^2 + DQ^2)\}^{1/2} \quad (1)$$

where Z is the effective value of the digital multiplex signal; T is a predetermined time period in which the effective value is calculated; DI is the signal level of the I component; and DQ is the signal level of the Q component.

The effective value calculation circuit 13 supplies the effective value of the digital multiplex signal it calculates to the scaling factor calculation circuit 14 as the effective value signal.

Receiving the effective value signal supplied from the effective value calculation circuit 13, the scaling factor calculation circuit 14 calculates the scaling factor by the following expression (2) from the effective value of the digital multiplex signal, and the digital conversion value of the desired level for the quadrature modulation circuit 4 supplied from the section consisting of the stages from the scaling circuit 11 to the D/A converter 3.

$$S = D/Z \quad (2)$$

where S is the scaling factor, and D is the digital conversion value.

The scaling factor calculation circuit 14 supplies the scaling factor it calculates to the scaling circuit 11 and to the attenuation control signal generating circuit 15 as the scaling control signal.

Receiving the scaling control signal from the scaling factor calculation circuit 14, the scaling circuit 11 controls the signal level of the digital multiplex signal, which is composed of the I and Q components and generated by the digital modulation circuit 1, in response to the scaling factor.

The I and Q components of the digital multiplex signal passing through the scaling processing using the scaling factor are given by the following expression (3).

$$DI_S = DI \times S$$

$$DQ_S = DQ \times S \quad (3)$$

where $DI_S$ is the signal level of the I component after the scaling processing, and $DQ_s$ is the signal level of the Q component after the scaling processing.

By thus carrying out the scaling processing, which multiplies the scaling factor and the digital multiplex signal consisting of the I and Q components generated by the digital modulation circuit 1, the scaling circuit 11 can adjust the signal level of the digital multiplex signal consisting of the I and Q components so that the signal level falls appropriately within the dynamic range of the quadrature modulation circuit 4.

Although the scaling factor calculation circuit 14 calculates the scaling factor by expression (2), this is not essential. For example, the scaling factor calculation circuit 14 can calculate the scaling factor by the following expression (4). In this case, the scaling circuit 11 can carry out the scaling processing by bit shift processing.

$$S = INT\{\log_2(D/Z)\} \quad (4)$$

where INT represents a function of taking an integer.

In this case, when the scaling factor is positive, the scaling circuit 11 shifts up the digital multiplex signal, which is composed of the I and Q components and generated by the digital modulation circuit 1, by S bits, whereas when the scaling control signal is negative, it shifts it down by S bits, thereby achieving the scaling processing.

The digital filter 2 band-limits the digital multiplex signal consisting of the I and Q components, which is output from the scaling circuit 11. The D/A converter 3 converts the I and Q components into corresponding analog signals, thereby generating the analog baseband signals consisting of the I and Q components. The quadrature modulation circuit 4 up-converts the analog baseband signals consisting of the I and Q components to the RF signal.

The attenuation control signal generating circuit 15 generates the attenuation control signal in response to the scaling control signal supplied from the scaling factor calculation circuit 14 and the characteristics of the variable attenuation circuit 12.

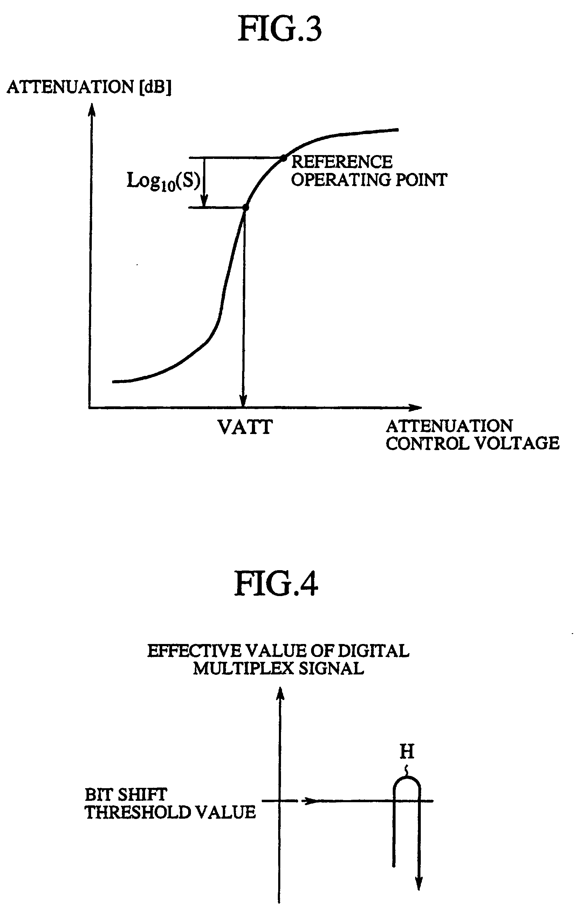

Fig. 3 is a characteristic diagram illustrating the characteristics of the variable attenuation circuit. When the scaling factor is S, the attenuation control voltage is obtained as a point VATT separated by $\log_{10}(S)$ [dB] from the reference operating point of the variable attenuation circuit 12. The attenuation control signal generating circuit 15 stores the characteristics of the variable attenuation circuit 12 as illustrated in Fig. 3 as a data table, and generates, in response to the input of the scaling factor, such an attenuation control signal that will cancel out the effect of the control of the scaling circuit 11 on the RF signal output from the quadrature modulation circuit 4.

The D/A converter 16 carries out the D/A conversion of the attenuation control signal, and supplies its output to the variable attenuation circuit 12.

In response to the attenuation control signal supplied from the D/A converter 16, the variable attenuation circuit 12 attenuates the signal level of the RF signal output from the quadrature modulation circuit 4, thereby correcting the signal level to its original level by canceling out the effect of the control of the scaling circuit 11 on the RF signal output from the quadrature modulation circuit 4.

The transmitting amplifier 5 amplifies the RF signal passing through the correction by the variable attenuation circuit 12, and transmits it via the transmitting antenna 6 in accordance with the RF signal.

As described above, the present embodiment 1 is configured such that it calculates the scaling factor for adjusting the signal level of the digital multiplex signal to the appropriate level as the input to the quadrature modulation circuit 4, controls the signal level of the digital multiplex signal by using the scaling factor, and corrects the signal level to its original level in accordance with the scaling factor in the stage after the quadrature modulation circuit 4. As a result, the present embodiment 1 can prevent the degradation in frequency characteristics due to the adjacent channel leakage power that can occur when the input signal level to the quadrature modulation circuit 4 is too large, and the degradation in the waveform quality due to the dominant carrier leakage component of the RF signal when the input signal level is too small.

In addition, calculating the scaling factor by the scaling factor calculation circuit 14 using the foregoing expression (4) can make the scaling processing easier because in this case it is achieved by the bit shift processing by the scaling circuit 11.

EMBODIMENT 2

In the present embodiment 2, the scaling factor calculation circuit 14 has a hysteresis characteristic in the variable range of the scaling factor in order to output the scaling factor calculated by taking account of the hysteresis characteristic as the scaling control signal.

Next, the operation will be described.

As described above in the embodiment 1, when the scaling factor calculation circuit 14 calculates the scaling factor by expression (4), the scaling circuit 11 can carry out the scaling processing with ease by the bit shift processing. However, when repeating the increase and decrease of the effective value of the digital multiplex signal near a changing point of the scaling factor, the scaling factor will be changed frequently. Thus, this will compel the scaling circuit 11 to carry out the shift processing often, and the attenuation control signal generating circuit 15 to generate the attenuation control signal often.

Fig. 4 is a diagram illustrating the operation of the scaling factor calculation circuit. In this figure, the reference symbol H designates behavior of the effective value of the digital multiplex signal, which increases near a bit shift threshold value, and then reduces thereafter. When the effective value of the digital multiplex signal varies as indicated by the curve H, the bit shift processing must carry out a bit shift down processing when the effective value of the digital multiplex signal exceeds the threshold value, and a bit shift up processing when the effective value of the digital multiplex signal falls below the bit shift threshold value.

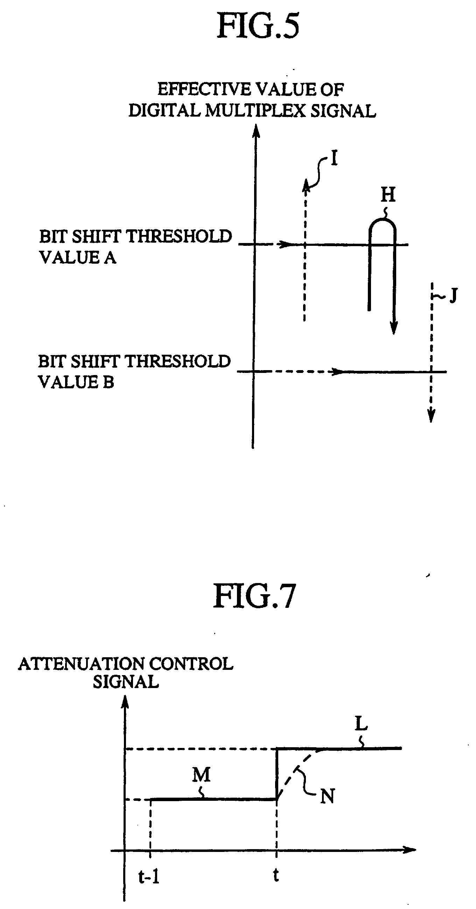

Fig. 5 is a diagram illustrating the operation of the scaling factor calculation circuit of the embodiment 2 of the direct sequence CDMA base station transmitter in accordance with the present invention. In this figure, two threshold values are provided: a bit shift threshold value A for the bit shift down; and a bit shift threshold value B for a bit shift up. In Fig. 5, the reference symbol I indicates a manner in which the effective value of the digital multiplex signal increases. In this case, the bit shift down processing is carried out when the effective value exceeds the bit shift threshold value A. In contrast, the reference symbol J indicates a manner in which the effective value of the digital multiplex signal reduces. In this case, the bit shift up processing is carried out when the effective value falls below the bit shift threshold value B. The curve H indicates a transition of the effective value of the digital multiplex signal as in Fig. 4. The bit shift down processing is carried out when the effective value of the digital multiplex signal increases along the curve H, and exceeds the bit shift threshold value A. However, when the effective value of the digital multiplex signal decreases below the bit shift threshold value A, the bit shift up processing is not carried out until it falls below the bit shift threshold value B.

Thus, even when the effective value of the digital multiplex signal repeats the increase and decrease near the changing point of the scaling factor, the scaling factor is not changed frequently. As a result, it is not necessary for the scaling circuit 11 to carry out the bit shift processing frequently, and for the attenuation control signal generating circuit 15 to generate the attenuation control signal frequently.

As described above, the present embodiment 2 is configured such that the scaling factor calculation circuit 14 has the hysteresis characteristic in the variable range of the scaling factor, and outputs the scaling factor calculated in accordance with the hysteresis characteristic as the scaling control signal. Accordingly, the scaling factor is not changed often even when the effective value of the digital multiplex signal repeats the increase and decrease near the changing point of the scaling factor. As a result, it can obviate the need for the scaling circuit 11 to carry out the bit shift processing often, and for the attenuation control signal generating circuit 15 to generate the attenuation control signal frequently, thereby making it possible to improve the stability of the operation.

EMBODIMENT 3

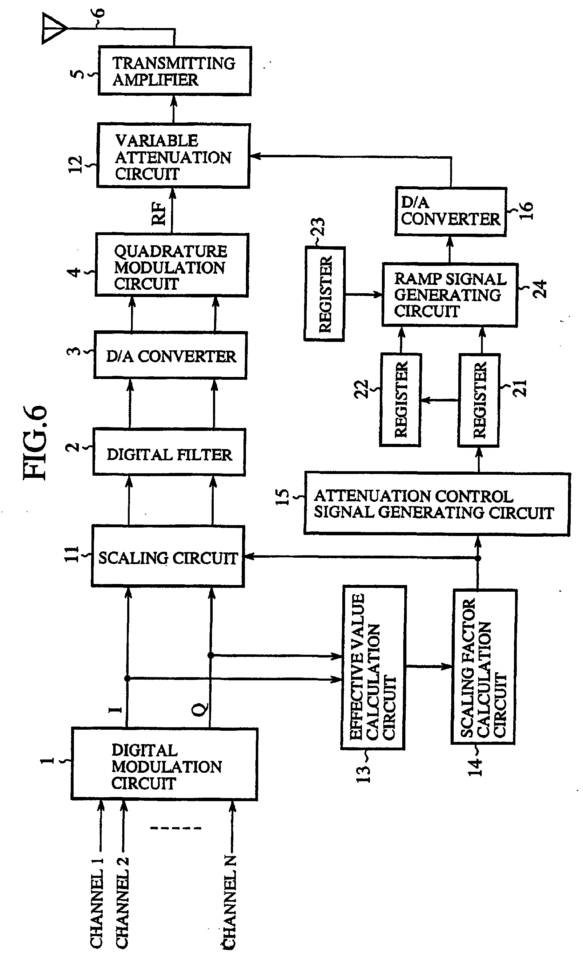

Fig. 6 is a block diagram showing a configuration of an embodiment 3 of the direct sequence CDMA base station transmitter in accordance with the present invention. In this figure, the reference numeral 21 designates a register for holding the attenuation control signal generated at present; 22 designates a register for holding the attenuation control signal generated at a predetermined time before; 23 designates a register for holding a RAMP coefficient; and 24 designates a RAMP signal generating circuit for performing RAMP processing in response to the attenuation control signals held in the registers 21 and 22 and in accordance with the RAMP coefficient held in the register 23, and supplies its output to the D/A converter 16.

Since the remaining configuration is the same as that of Fig. 2, the description thereof is omitted here.

Next, the operation will be described.

Fig. 7 is a diagram illustrating the operation of the embodiment 3 of the direct sequence CDMA base station transmitter in accordance with the present invention. Referring to Fig. 7 along with Fig. 6 showing the configuration, the present embodiment will be described.

The register 21 holds the attenuation control signal L the attenuation control signal generating circuit 15 generates at time t, and the register 22 holds the attenuation control signal M the attenuation control signal generating circuit 15 generates at time t-1. The RAMP signal generating circuit 24 subtracts the attenuation control signal M held in the register 22 from the attenuation control signal L held in the register 21, multiplies the difference by the RAMP coefficient held in the register 23, thereby performing the RAMP processing N, and supplies the D/A converter 16 with the sum of the result and the attenuation control signal M as the attenuation control signal. At this time, the attenuation control signal L held in the register 21 is shifted to the register 22.

As described above, the present embodiment 3 can smooth the transition of the attenuation control signal generated by the attenuation control signal generating circuit 15, and supplies it to the D/A converter 16. Thus, it can prevent the degradation in the frequency characteristics because of the abrupt change in the attenuation control signal.

Although the foregoing embodiments are described taking an example of the direct sequence CDMA base station transmitter as the multiplex communication system, the scope of the present invention is not limited to these embodiments. For example, it is applicable to a CDMA system using the frequency hopping scheme or infrared rays, or to a multiplex communication system using the FDMA or TDMA scheme. In addition, it is applicable not only to the base station transmitter, but also to a mobile station transmitter.

INDUSTRIAL APPLICABILITY

As described above, the multiplex communication system and its signal processing method in accordance with the present invention can adjust the input signal level to the quadrature modulation circuit such that it falls within the dynamic range of the quadrature modulation circuit, even when the signal level of the digital multiplex signal fluctuates because of the multiplexing state of the base station or the power variations of the individual channels. Thus, the present invention is suitable for preventing the degradation in the transmission signal waveform quality because of too great or too small an input signal level to the quadrature modulation circuit, and for correcting the level of the signal to its original level in a stage after the quadrature modulation circuit.

**Claims**

1. A multiplex communication system in which signal converting means converts into an analog baseband signal a digital multiplex signal consisting of a plurality of digital signals multiplexed, and in which quadrature modulation means converts the analog baseband signal into an RF signal, said multiplex communication system comprising:

scaling calculation means for calculating a scaling factor, which is used for amplitude adjusting processing of the digital multiplex signal, in response to an amplitude of the digital multiplex signal generated by digital modulation means and in accordance with an amplitude range suitable for signal processing by said quadrature modulation means;

scaling control means for performing the amplitude adjusting processing of the digital multiplex signal in response to the scaling factor calculated by said scaling calculation means, and for supplying its result to said signal converting means;

control signal generating means for generating a correction control signal in response to the scaling factor generated by said scaling calculation means; and

signal correcting means for performing, in response to the correction control signal, correction processing of the RF signal output from said quadrature modulation means to cancel out effect of the amplitude adjusting processing carried out by said scaling control means.

2. The multiplex communication system according to claim 1, wherein said control signal generating means calculates the scaling factor from an effective value of amplitudes of an in-phase component and a quadrature component of the digital multiplex signal and from a digital conversion value of the amplitude range suitable for the signal processing of said quadrature modulation means, the digital multiplex signal being generated by data modulation followed by direct sequence CDMA modulation of coded transmission data of multiple channels by said digital modulation means.

3. The multiplex communication system according to claim 2, wherein said control signal generating means calculates the scaling factor by

$$S = INT\{\log_2(D/Z)\}$$

where

S is the scaling factor,
INT is a function for taking an integer value,
Z is the effective value of the digital multiplex signal, and
D is the digital conversion value,

and supplies the scaling factor to said scaling control means as a scaling control signal, and wherein said scaling control means shifts up by S bits the digital multiplex signal consisting of the in-phase component and quadrature component generated by said digital modulation means when the scaling control signal is positive, and shifts down by S bits the digital multiplex signal consisting of the in-phase component and quadrature component generated by said digital modulation means when the scaling control signal is negative.

4. The multiplex communication system according to claim 3, wherein said control signal generating means provides the digital conversion value D with a hysteresis characteristic, and carries out S-bit shift up or down of the digital multiplex signal composed of the in-phase component and quadrature component generated by said digital modulation means.

5. The multiplex communication system according to claim 1, wherein said control signal generating means supplies said signal correcting means with the correction control signal passing through RAMP processing that is performed in response to the correction control signal generated at a predetermined time before and the correction control signal generated at present.

6. The multiplex communication system according to claim 2, wherein said control signal generating means supplies said signal correcting means with the correction control signal passing through RAMP processing that is performed in response to the correction control signal generated at a predetermined time before and the correction control signal generated at present.

7. The multiplex communication system according to claim 3, wherein said control signal generating means supplies said signal correcting means with the correction control signal passing through RAMP processing that is performed in response to the correction control signal generated at a predetermined time before and the correction control signal generated at present.

8. The multiplex communication system according to claim 4, wherein said control signal generating means supplies said signal correcting means with the correction control signal passing through RAMP processing that is performed in response to the correction control signal generated at a predetermined time before and the correction control signal generated at present.

9. A signal processing method of a multiplex communication system in which signal converting means converts into an analog baseband signal a digital multiplex signal consisting of a plurality of digital signals multiplexed, and in which quadrature modulation means converts the analog baseband signal into an RF signal, said signal processing method comprising the steps of:

calculating a scaling factor, which is used for amplitude adjusting processing of the digital multiplex signal, in response to an amplitude of the digital multiplex signal generated by digital modulation means and in accordance with an amplitude range suitable for signal processing by said quadrature modulation means;

performing the amplitude adjusting processing of the digital multiplex signal in response to the scaling factor calculated, and for supplying its result to said signal converting means;

generating a correction control signal in response to the scaling factor generated; and

performing, in response to the correction control signal, correction processing of the RF signal output from said quadrature modulation means to cancel out effect of the amplitude adjusting processing.

# FIG.1

EP 1 185 016 A1

CHANNEL 1 → **DIGITAL MODULATION CIRCUIT** (1)

CHANNEL 2 →

CHANNEL N →

I, Q → **DIGITAL FILTER** (2) → **D/A CONVERTER** (3) → **QUADRATURE MODULATION CIRCUIT** (4) → RF → **TRANSMITTING AMPLIFIER** (5) → 6

# FIG.2

EP 1 185 016 A1

# FIG.3

ATTENUATION [dB]

$Log_{10}(S)$

REFERENCE
OPERATING POINT

VATT

ATTENUATION
CONTROL VOLTAGE

# FIG.4

EFFECTIVE VALUE OF DIGITAL
MULTIPLEX SIGNAL

H

BIT SHIFT
THRESHOLD VALUE

# FIG.5

EFFECTIVE VALUE OF
DIGITAL MULTIPLEX SIGNAL

BIT SHIFT THRESHOLD
VALUE A

BIT SHIFT THRESHOLD
VALUE B

# FIG.7

ATTENUATION CONTROL
SIGNAL

t-1          t

# FIG.6

EP 1 185 016 A1

## INTERNATIONAL SEARCH REPORT

International application No.

PCT/JP01/02953

| A. CLASSIFICATION OF SUBJECT MATTER |
|---|
| Int.Cl⁷   H04J13/04, H04B1/707 |

According to International Patent Classification (IPC) or to both national classification and IPC

| B.   FIELDS SEARCHED |
|---|
| Minimum documentation searched (classification system followed by classification symbols)<br>    Int.Cl⁷   H04B1/69-1/713, H04J13/00-13/06,<br>         H04L27/00-27/38 |

Documentation searched other than minimum documentation to the extent that such documents are included in the fields searched
    Jitsuyo Shinan Koho        1926-1996     Toroku Jitsuyo Shinan Koho   1994-2001
    Kokai Jitsuyo Shinan Koho   1971-2001     Jitsuyo Shinan Toroku Koho   1996-2001

Electronic data base consulted during the international search (name of data base and, where practicable, search terms used)
    JOIS

### C.   DOCUMENTS CONSIDERED TO BE RELEVANT

| Category* | Citation of document, with indication, where appropriate, of the relevant passages | Relevant to claim No. |
|---|---|---|
| X<br>A | JP, 10-308718, A (NEC Saitama Ltd.),<br>17 November, 1998 (17.11.98),<br>page 2, column 2, lines 37 to 42; page 3, column 3, line<br>50 to page 5, column 8, line 13; all drawings<br>(Family: none) | 1,2,9<br>3-8 |
| A | JP, 8-79132, A (Matsushita Communication Industrial Co.,<br>Ltd.),<br>22 March, 1999 (22.03.99),<br>Full text; all drawings   (Family: none) | 1-9 |
| A | JP, 10-65647, A (NTT Ido Tsushinmo K.K.),<br>06 March, 1998 (06.03.98),<br>Full text; all drawings   (Family: none) | 1-9 |
| A | JP, 10-178414, A (Fujitsu Limited),<br>30 June, 1998 (30.06.98),<br>Full text; all drawings<br>& KR, 98063366, A   & KR, 232554, B1<br>& US, 6009090, A | 1-9 |

| ☒ Further documents are listed in the continuation of Box C. | ☐ See patent family annex. |
|---|---|

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>    26 June, 2001 (26.06.01) | Date of mailing of the international search report<br>    10 July, 2001 (10.07.01) |
|---|---|
| Name and mailing address of the ISA/<br>    Japanese Patent Office | Authorized officer |
| Facsimile No. | Telephone No. |

Form PCT/ISA/210 (second sheet) (July 1992)

EP 1 185 016 A1

## INTERNATIONAL SEARCH REPORT

International application No.

PCT/JP01/02953

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 10-126309, A (Hitachi, Ltd.),<br>15 May, 1998 (15.05.98),<br>Full text; all drawings<br>& KR, 98032777, A   & US, 6144694, A | 1-9 |
| A | JP, 11-234229, A (NEC Saitama Ltd.),<br>27 August, 1999 (27.08.99),<br>Full text; all drawings   (Family: none) | 1-9 |
| P,X<br>P,A | JP, 2000-138655, A (Kokusai Electric Co., Ltd.),<br>16 May, 2000 (16.05.00),<br>page 6, column 9, line 45 to page 7, column 12,<br>line 39; Figs. 3, 5, 9   (Family: none) | 1,2,9<br>3-8 |
| P,X<br>P,A | JP, 2000-244449, A (Kokusai Electric Co., Ltd.),<br>08 September, 2000 (08.09.00),<br>page 4, column 5, line 28 to page 6, column 9,<br>line 21; Figs. 4 to 6   (Family: none) | 1,2,9<br>3-8 |
| P,A | JP, 2000-183851, A (NEC Corporation),<br>30 June, 2000 (30.06.00),<br>Figs. 2 to 4<br>& EP, 1011207, A2   & AU, 9965252, A<br>& CN, 1258144, A   & KR, 2000057065, A | 3 |
| P,A | JP, 2001-44857, A (NEC Corporation),<br>16 February, 2001 (16.02.01),<br>Full text; Fig. 4   (Family: none) | 4 |

Form PCT/ISA/210 (continuation of second sheet) (July 1992)

16